# EUROPÄISCHE PATENTSCHRIFT

(11) **EP 1 145 063 B1**
(45) Veröffentlichungstag und Bekanntmachung des Hinweises auf die Patenterteilung: **17.03.2004**
(21) Anmeldenummer: 00903521.3
(22) Anmeldetag: 06.01.2000
(51) Int. Cl.: G02B 6/42, H04B 10/24

(54) **MEHRKANALIGE ELEKTROOPTISCHE BAUGRUPPE**
MULTI-CHANNEL ELECTRO-OPTICAL COMPONENT
COMPOSANT ELECTRO-OPTIQUE A CANAUX MULTIPLES

(30) Priorität: 06.01.1999 DE 19900695
(43) Veröffentlichungstag der Anmeldung: 17.10.2001
(73) Patentinhaber: Infineon Technologies AG, 81669 München (DE)
(72) Erfinder: KROPP, Jörg-Reinhardt, D-12355 Berlin (DE)
(74) Vertreter: Müller, Wolfram Hubertus, Dr. Dipl.-Phys.
(86) Internationale Anmeldenummer: PCT/DE2000/000091
(87) Internationale Veröffentlichungsnummer: WO 2000/041020

(56) Entgegenhaltungen:
- EP-A- 0 826 995
- EP-A- 0 844 503
- US-A- 4 701 010
- US-A- 5 408 559
- US-A- 5 416 624

## Beschreibung

Die Erfindung betrifft eine mehrkanalige elektrooptische Baugruppe nach dem Oberbegriff des Anspruchs 1. Sie liegt auf dem Gebiet der elektrooptischen Datenübertragung, bei der von einem Sender in optische Signale (z. B. Infrarot-Lichtsignale) gewandelte elektrische Informationen über einen geeigneten Lichtwellenleiter zu einem optischen Empfänger gelangen. Der Empfänger wandelt die empfangenen Signale in elektrische Signale zurück. Derartige Sender und Empfänger werden nachfolgend allgemein auch als elektrooptische Wandler bezeichnet.

Im Rahmen der vorliegenden Erfindung ist also unter einem Wandler eine Baugruppe zu verstehen, die bei entsprechender elektrischer Ansteuerung ein optisches Signal (Strahlung) abgibt (Sender) bzw. bei Beaufschlagung mit einem optischen Signal ein entsprechendes elektrisches Signal generiert (Empfänger). Die eigentliche elektrooptische Signalumwandlung erfolgt in einem strahlungsemittierenden Bereich bzw. einem strahlungssensitiven Bereich. Diese Bereiche oder Flächen werden allgemein auch als optisch aktive Zonen bezeichnet. Geeignete Wandler sind beispielsweise Laserdioden oder Fotodioden.

Im Rahmen der Erfindung ist unter einem Lichtwellenleiter jedes zur räumlich begrenzten geführten Weiterleitung eines optischen Signals geeignete Element zu verstehen, z. B. konfektionierte Lichtwellenleiter, die in einem sog. Lichtwellenleiterbändchen parallel zusammengefaßt sein können.

Eine gattungsgemäße Baugruppe ist in der Druckschrift US-A-5,416,624 beschrieben. Diese weist ein Sendearray und ein Empfängsarray elektrooptischer Wandler auf, die über eine Umlenkeinrichtung mit Lichtwellenleitern gekoppelt sind. Die Umlenkeinrichtung weist dabei eine Anordnung wellenselektiv beschichteter Linsen auf, die bewirken, daß Strahlung einer ersten Wellenlänge von dem Sendearray in die Lichtwellenleiter eingekoppelt und aus den Lichtwellenleitern ausgekoppelte Strahlung einer zweiten Wellenlänge auf den Empfangsarray geleitet wird.

In dem Aufsatz "1-Gbyte/sec Array Transmitter and Receiver Modules for Low-cost Optical Fiber Interconnection" von T. Nagahori u.a. aus 1996 IEEE, Electronic Components and Technology Conference, S. 255 bis 258 wird eine Baugruppe beschrieben, die mehrere elektrooptische Wandler aufweist, die als optische Empfänger ausgebildet sind. Jeder Empfänger ist einem Lichtwellenleiterende eines mehrkanaligen Lichtwellenleiterbändchens ("optical fiber array") zugeordnet. Der strahlungssensitive Bereich jedes Wandlers ist über einen Spiegel mit dem lichtführenden Kern des jeweiligen Lichtwellenleiters optisch gekoppelt. Die Sensitivität der Wandler ist auf eine einzige bestimmte, von den Lichtwellenleitern übertragene Lichtwellenlänge beschränkt.

In der optischen Datenübertragungstechnik besteht zunehmend die Anforderung, die Datenübertragungskapazität bei gleichzeitiger Reduzierung und Vereinfachung der einzelnen Komponenten sowie Minimierung des benötigten Bauraumes zu erhöhen. Dies hat insbesondere zu der Entwicklung von mehrkanaligen Übertragungssysteme geführt.

Der Erfindung liegt die Aufgabe zugrunde, die Übertragungskapazität einer mehrkanaligen elektrooptischen Baugruppe ohne Erhöhung des Bauraums auf möglichst einfache Weise wesentlich zu erhöhen.

Diese Aufgabe wird erfindungsgemäß durch eine Baugruppe mit den Merkmalen des Anspruchs 1 gelöst.

Danach ist vorgesehen, daß mindestens zwei Arrays elektrooptischer Wandler parallel zueinander angeordnet sind und eine Umlenkanordnung mindestens zwei parallel angeordnete Spiegelflächen aufweist, die jeweils einem Array zugeordnet sind. Dadurch wird erreicht, daß in jeden Lichtwellenleiter Strahlung der ersten Wellenlänge und Strahlung der zweiten Wellenlänge ein- oder ausgekoppelt oder Strahlung der ersten Wellenlänge eingekoppelt und Strahlung der zweiten Wellenlänge ausgekoppelt wird.

Ein wesentlicher Vorteil der erfindungsgemäßen Baugruppe besteht darin, daß durch die auf mehreren parallelen, physikalisch getrennten Kanälen überlagerte Übertragung mit unterschiedlichen Lichtwellenlangen ("wave length division multiplex") eine ganz erhebliche Steigerung der Übertragungskapazität realisiert werden kann, ohne daß es zu einer Erhöhung des dafür benötigten Bauraumes bzw. der dafür benötigten Anzahl der Übertragungskanale kommt.

Sofern in jeden Lichtwellenleiter Strahlung sowohl der ersten Wellenlänge als auch der zweiten Wellenlänge eingekoppelt oder aus jedem Lichtwellenleiter Strahlung sowohl der ersten Wellenlänge als auch der zweiten Wellenlänge ausgekoppelt wird, ermöglicht die Erfindung einen mehrkanaligen Sendeoder Empfangsbetrieb über mehrere separate Lichtwellenleiter im Wellenlängen-Multiplex-Betrieb.

In einer bevorzugten, besonders kompakten Ausgestaltung der Erfindung ist vorgesehen, daß zumindest eine der parallel angeordneten Spiegelflächen Strahlung mit der ersten Lichtwellenlänge reflektiert und Strahlung mit der zweiten Lichtwellenlänge durchläßt.

Hinsichtlich der Ausrichtung und der Montage ergeben sich weitere Vorteile bei einer Ausgestaltung der erfindungsgemäßen Baugruppe, bei der die optischen Achsen der Wandler einerseits und die optischen Achsen der Lichtwellenleiter andererseits rechtwinklig zueinander stehen und daß die Wandler in parallelen Reihen verlaufen.

Eine besonders effektive Kopplung mit einem hohen Kopplungswirkungsgrad zwischen den Lichtwellenleitern und den zugeordneten Wandlern läßt sich nach einer bevorzugten Fortbildung der Erfindung dadurch erreichen, daß die Umlenkanordnung an mindestens einer den Wandlern oder den Lichtwellenleitern zugewandten Kopplungsfläche strahlformende Elemente aufweist.

Ein Ausführungsbeispiel der Erfindung wird nachfolgend anhand einer Zeichnung weiter erläutert; es zeigen vergrößert:
Figur 1 eine Aufsicht auf eine erfindungsgemäße Baugruppe und
Figur 2 perspektivisch in sehr starker Vergrößerung einen Längsschnitt der in Figur 1 gezeigten Baugruppe.

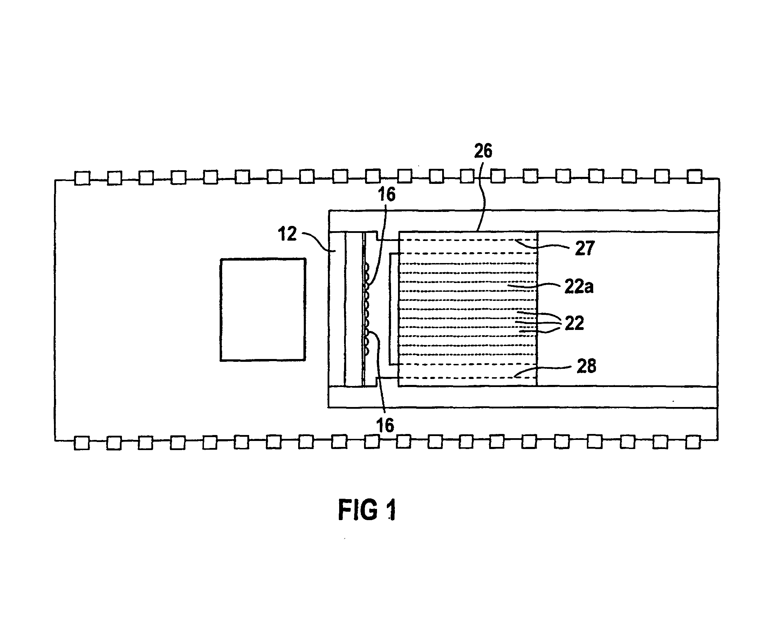

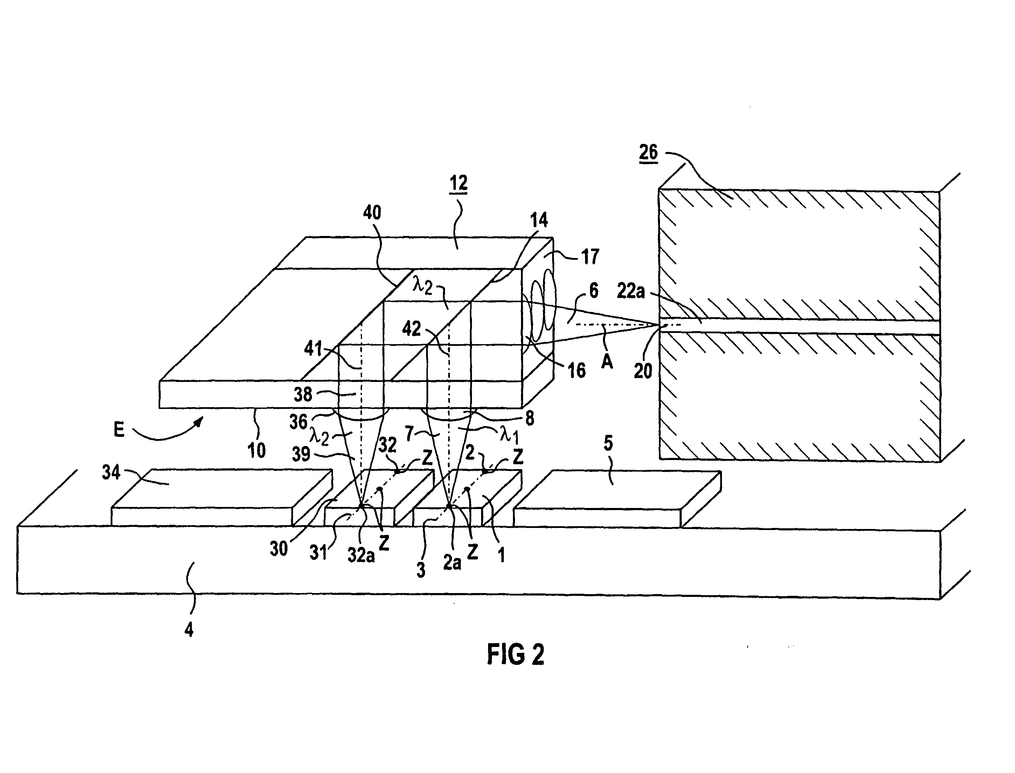

Die in den Figuren 1 und 2 gezeigte mehrkanalige Baugruppe umfaßt einen ersten Chip 1 mit mehreren (beispielsweise 10) elektrooptischen Wandlern 2, die in einer Reihe 3 angeordnet sind. Aus Gründen der vereinfachten Darstellung sind in der perspektivischen Ansicht der Figur 2 nur die optisch aktiven Zonen Z von drei Wandlern 2 als Punkte angedeutet. Der Chip (Wandlerarray) 1 ist auf einer Trägerplatte 4 in unmittelbarer Nähe zu einer nur schematisch angedeuteten Ansteuerschaltung 5 angeordnet. Die elektrooptischen Wandler 2 wandeln gemäß ihrer elektrischen Ansteuerung durch die Ansteuerschaltüng 5 elektrische Signale in Lichtsignale um, die vertikal nach oben von den optisch aktiven Zonen Z ausgesendet werden. In Figur 2 ist beispielhaft der Strahlengang 6 des in der Schnittebene E liegenden Wandlers 2a dargestellt. Die senkrecht nach oben emittierte Strahlung 7 gelangt über ein strahlformendes Element in Form einer Linse 8 an der dem Wandler 2a zugewandten Kopplungsfläche 10 einer Umlenkanordnung 12 zu einer wellenlängenselektiv spiegelnden Fläche 14. Die Spiegelfläche 14 kann als dielektrische Spiegelschicht ausgebildet sein und für die von dem Wandler 2a emittierte Strahlung 7 mit einer Wellenlänge von λ₁ = 980 nm reflektierend wirken und für Strahlung mit einer zweiten Wellenlänge von beispielsweise λ₂ = 950 nm durchlässig sein. Die an der Fläche 14 reflektierte Strahlung 7 gelangt über eine weitere Linse 16 an einer weiteren Kopplungsfläche 17 in den lichtleitenden Kern 20 eines zugeordneten Lichtwellenleiters 22a. Der Lichtwellenleiter 22a ist mit weiteren Lichtwellenleitern 22 in einem Zwischenstück oder Anschlußstecker 26 enthalten. Der Anschlußstecker 26 umfaßt andeutungsweise dargestellte Ausrichtbohrungen 27,28 (Figur 1), in die Ausrichtstifte eines Kopplungspartners eindringen können. Die beispielsweise insgesamt zehn Lichtwellenleiter 22a, 22 sind somit Bestandteil eines Zwischenstückes, an das der eigentlichen Fernübertragung dienende Lichtwellenleiter oder andere Kopplungspartner optisch ankoppelbar sind. Grundsätzlich ist auch denkbar, das Zwischenstück 26 von der Umlenkanordnung lösbar und trennbar und nur bedarfsweise ankoppelbar auszugestalten. Dies stellt allerdings höhere Anforderungen an die Reproduzierbarkeit der Koppelverhältnisse.

Das Wandlerarray 1 kann eine der Anzahl der Lichtwellenleiter 22a, 22 entsprechende Anzahl von Wandlern 2 aufweisen; es kann aber auch mehr Wandler aufweisen, wobei die überschüssigen Wandler beispielsweise der Überwachung oder Leistungskontrolle des Wandlerarrays 1 dienen.

Auf der Trägerplatte 4 ist ein weiterer Chip (Wandlerarray) 30 angeordnet, der in einer Reihe 31 ausgebildete elektrooptische Wandler 32 enthält. Zur Verdeutlichung sind auch von den Wandlern 32 die optisch aktiven Zonen Z als Punkte dargestellt. In unmittelbarer Nachbarschaft des weiteren Wandlerarrays 30 ist eine weitere Ansteuerschaltung 34 angeordnet, die bei entsprechender elektrischer Beaufschlagung Ansteuerimpulse an die individuellen Wandler 32 ausgibt und diese dadurch zur Strahlungsabgabe veranlaßt. Den weiteren Wandlern 32 ist jeweils eine an der Kopplungsfläche 10 ausgebildete Linse 36 zugeordnet. Wie der nur für den in der Schnittebene E liegenden Wandler 32a beispielhaft gezeigte Strahlengang 38 verdeutlicht, gelangt von dem Wandler 32a ausgesandte Strahlung 39 mit einer zweiten, von der ersten λ₁ verschiedenen Wellenlänge λ₂ über die Linse 36 zu einer zweiten Spiegelfläche 40. Die zweite Spiegelfläche 40 ist parallel zu der ersten Spiegelfläche 14 ausgebildet und in einem Winkel von 45° zu den optischen Achsen 41 der Wandler 32 und zu optischen Achsen 42 der Wandler 2 bzw. zu den optischen Achsen A der Lichtwellenleiter 22a, 22 geneigt. Von dem Wandler 32a emittierte Strahlung 39 gelangt durch Reflexion an der Fläche 40 auf die Rückseite der Fläche 14, die für die von dem Wandler 32a emittierte Wellenlänge λ₂ (von beispielsweise 950 nm) durchlässig ist. Somit gelangt die Strahlung über die Linse 16 ebenfalls in den lichtführenden Kern 20 desselben Lichtwellenleiters 22.

Die zweite Reihe 31 der weiteren Wandler 32 kann ebenfalls z. B. zehn oder mehr Wandler umfassen, wobei die gegenüber der Anzahl der Lichtwellenleiter überschüssigen Wandler 32 zu Zwecken der Leistungssteuerung oder Überwachung des Wandlerarrays 30 dienen können.

Mit der erfindungsgemäßen Baugruppe wird eine wesentliche Kapazitätserhöhung bzw. Raumreduzierung erreicht, indem gleichzeitig ein mehrkanaliger Betrieb über mehrere separate Übertragungskanäle (individuelle Lichtwellenleiter) im Wellenlängen-Multiplex-Betrieb durchgeführt werden kann.

Bevorzugt wird über jeden Lichtwellenleiter nicht nur Strahlung einer einzigen Wellenlänge, sondern Strahlungen verschiedener Wellenlängen übertragen. Im Rahmen des Ausführungsbeispiels ist zwar nur die Übertragung von Strahlungen zweier verschiedener Wellenlänge pro Lichtwellenleiter (beispielsweise mit 980 nm und 950 nm) erwähnt, doch können selbstverständlich in weiterer Kaskadierung weitere Reihen von Wandlern mit abweichenden Wellenlängen (z. B. 880 nm, 920 nm) vorgesehen sein. Die Überlagerung von Strahlungen unterschiedlicher Wellenlänge wird bei der erfindungsgemäßen Baugruppe mit Hilfe der Umlenkanordnung in äußerst einfacher Weise realisiert, indem einer der Umlenkspiegel eine wellenlängenselektive Reflexion bewirkt.

In gleicher Weise können auch Mischformen von Baugruppen realisiert werden, die sowohl sendende als auch empfangende elektrooptische Wandler umfassen. In zur dargestellten Bauform analoger Weise kann eine mehrkanalige elektrooptische Baugruppe zum Empfang überlagerter Datensignale realisiert werden. In diesem Fall wären die Arrays 1, 30 als Empfängerarrays auszugestalteen und wären über den wellenlängenselektiven Spiegel 14 mit jeweils aus einem Lichtwellenleiter 22 austretenden Signalen unterschiedlicher und damit differenzierbarer Wellenlängen beaufschlagt.

## Patentansprüche

1. Mehrkanalige elektrooptische Baugruppe mit
- einem ersten Array elektrooptischer Wandler (2) zur elektrooptischen Wandlung einer Strahlung mit einer ersten Lichtwellenlänge (λ₁),
- mindestens einem weiteren Array elektroptischer Wandler (32) zur elektrooptischen Wandlung einer Strahlung mit mindestens einer von der ersten Lichtwellenlänge (λ₁) verschiedenen zweiten Lichtwellenlänge (λ₂),
- mehreren Lichtwellenleitern (22a) und
- einer Umlenkeinrichtung zur optischen Kopplung jeweils eines elektrooptischen Wandlers (2, 32) des ersten und des weiteren Arrays einerseits und eines Lichtwellenleiters (22a) andererseits, wobei
- das mindestens eine weitere Array elektroopischer Wandler (32) parallel zu dem ersten Array elektroopischer Wandler (2) angeordnet ist,
**dadurch gekennzeichnet, daß**
- die Umlenkanordnung (12) mindestens zwei parallel und im Lichtweg hintereinander angeordnete Spiegelflächen (14, 40) aufweist, die den Arrays gegenüberliegen und jeweils einem der Arrays zugeordnet sind, wobei die Spiegelflächen und die Arrays derart angeordnet sind, daß
a) in die Lichtwellenleiter (22a) jeweils Strahlung der ersten Wellenlänge (λ₁) und Strahlung der zweiten Wellenlänge (λ₂) eingekoppelt wird, die von einem jeweils zugeordneten Wandler (2, 32) des ersten und des weiteren Arrays ausgesandt wird, oder
b) aus den Lichtwellenleitern (22a) jeweils Strahlung der ersten Wellenlänge (λ₁) und Strahlung der zweiten Wellenlänge (λ₂) ausgekoppelt wird, die von einem jeweils zugeordneten Wandler (2, 32) des ersten und des weiteren Arrays empfangen wird, oder
c) in die Lichtwellenleiter (22a) jeweils Strahlung der ersten Wellenlänge (λ₁) ein- und Strahlung der zweiten Wellenlänge (λ₂) ausgekoppelt wird, die von einem jeweils zugeordneten Wandler (2, 32) des ersten Arrays ausgesandt bzw. von einem jeweils zugeordneten Wandler des weiteren Arrays empfangen wird.

2. Baugruppe nach Anspruch 1,
**dadurch gekennzeichnet, daß**
- zumindest eine Spiegelfläche (14) Strahlung mit der ersten Lichtwellenlänge (λ₁) reflektiert und Strahlung mit der zweiten Lichtwellenlänge (λ₂) durchläßt.

3. Baugruppe nach Anspruch 1 oder 2, **dadurch gekennzeichnet, daß** die optischen Achsen (41) der Wandler (2, 32) einerseits und die optischen Achsen der Lichtwellenleiter (22) andererseits rechtwinklig zueinander stehen.

4. Baugruppe nach einem der Ansprüche 1 bis 3,
**dadurch gekennzeichnet**, d a ß
- die Umlenkanordnung (12) an mindestens einer den Wandlern (2a, 32a) oder den Lichtwellenleitern (22) zugewandten Kopplungsfläche (10, 17) strahlformende Elemente (8, 16, 36) aufweist.

## Claims

1. Multichannel electro-optical assembly having
- a first array of electro-optical transducers (2) for electro-optical conversion of a radiation having a first light wavelength (λ₁),
- at least one further array of electro-optical transducers (32) for electro-optical conversion of a radiation having at least one second light wavelength (λ₂) different from the first light wavelength (λ₁),
- a plurality of optical waveguides (22a), and
- a deflection device for optically coupling in each case an electro-optical transducer (2, 32) of the first array and of the further array, on the one hand, and an optical waveguide (22a), on the other hand,
- the at least one further array of electro-optical transducers (32) being arranged parallel to the first array of electro-optical transducers (2),
**characterized in that**
- the deflection arrangement (12) has at least two reflecting surfaces (14, 40) which are arranged parallel one behind the other in the light path, lie opposite the arrays and are respectively assigned to one of the arrays, the reflecting surfaces and the arrays being arranged in such a way that
a) into the optical waveguides (22a) radiation of the first wavelength (λ₁) and radiation of the second wavelength (λ₂) is in each case coupled in, which is emitted by a respectively assigned transducer (2, 32) of the first and of the further array, or
b) from the optical waveguides (22a) radiation of the first wavelength (λ₁) and radiation of the second wavelength (λ₂) is in each case coupled out, which is received by a respectively assigned transducer (2, 32) of the first and of the further array, or
c) into the optical waveguides (22a) radiation of the first wavelength (λ₁) is coupled in and radiation of the second wavelength (λ₂) is coupled out in each case, which is emitted by a respectively assigned transducer (2, 32) of the first array and, respectively, is received by a respectively assigned transducer of the further array.

2. Assembly according to Claim 1,
**characterized in that**
- at least one reflecting surface (14) reflects radiation having the first light wavelength (λ₁) and transmits radiation having the second light wavelength (λ₂).

3. Assembly according to Claim 1 or 2, **characterized in that** the optical axes (41) of the transducers (2, 32) on the one hand, and the optical axes of the optical waveguides (22), on the other hand, are at right angles to one another.

4. Assembly according to one of Claims 1 to 3,
**characterized in that**
- the deflection arrangement (12) has beam-shaping elements (8, 16, 36) on at least one coupling surface (10, 17) facing the transducers (2a, 32a) or the optical waveguides (22).

## Revendications

1. Composant électro-optique à canaux multiples comprenant
- un premier réseau de convertisseurs (2) électro-optiques de conversion électro-optique d'un rayonnement ayant une première longueur d'onde (λ₁) de la lumière,
- au moins un autre réseau de convertisseurs (32) électro-optiques de conversion électro-optique d'un rayonnement ayant au moins une deuxième longueur d'onde (λ₂) de la lumière différente de la première longueur d'onde (λ₁) de la lumière,
- plusieurs guides d'ondes (22a) de lumière et
- un dispositif de déviation destiné à coupler optiquement respectivement des convertisseurs (2, 32) électro-optiques du premier et de l'autre réseau, d'une part, et un guide d'onde (22a), d'autre part, dans lequel
- le au moins un autre réseau de convertisseurs (32) électro-optiques est disposé parallèlement au premier réseau de convertisseurs (2) électro-optiques,
**caractérisé en ce que**
- le dispositif (12) de déviation a au moins deux surfaces (14, 40) de miroir disposées parallèlement et l'une derrière l'autre dans le trajet de la lumière, qui sont disposées en face des réseaux et qui sont associées respectivement à l'un des réseaux, les surfaces de miroir et les réseaux étant disposés de façon à ce que
a) il est injecté dans le guide d'onde (22a) de la lumière respectivement du rayonnement de la première longueur d'onde (λ₁) et du rayonnement de la deuxième longueur d'onde (λ₂), qui sont émis par un convertisseur (2, 32) respectivement associé du premier et de l'autre réseau, ou
b) il sort des guides d'ondes (22a) de la lumière respectivement du rayonnement de la première longueur d'onde (λ₁) et du rayonnement de la deuxième longueur d'onde (λ₂) qui sont reçus par un convertisseur (2, 32) respectivement associé du premier et de l'autre réseau, ou
c) il est injecté dans les guides d'ondes (22a) de la lumière respectivement du rayonnement de la première longueur d'onde (λ₁) et il sort du rayonnement de la deuxième longueur d'onde (λ₂), qui est émis par un convertisseur (2, 32) respectivement associé du premier réseau et qui est respectivement reçu par un convertisseur respectivement associé de l'autre réseau.

2. Composant suivant la revendication 1,
**caractérisé en ce que**
- au moins une surface (14) de miroir réfléchit du rayonnement ayant la première longueur d'onde (λ₁) de la lumière et laisse passer du rayonnement ayant la deuxième longueur d'onde (λ₂) de la lumière.

3. Composant suivant la revendication 1 ou 2, **caractérisé en ce que** les axes (41) optiques des convertisseurs (2, 32), d'une part, et les axes optiques des guides d'ondes (22) de la lumière, d'autre part, sont perpendiculaires entre eux.

4. Composant suivant l'une des revendications 1 à 3,
**caractérisé en ce que**
- le dispositif (12) de déviation a, sur au moins l'une des surfaces (10, 17) de couplage tournée vers l'un des convertisseurs (2a, 32a) ou des guides d'ondes (22) de la lumière, des éléments (8, 16, 36) de formation de faisceaux.
